(19) **Europäisches Patentamt / European Patent Office / Office européen des brevets**

(11) **EP 1 601 746 B1**

(12) **EUROPÄISCHE PATENTSCHRIFT**

(45) Veröffentlichungstag und Bekanntmachung des Hinweises auf die Patenterteilung:
**11.04.2007 Patentblatt 2007/15**

(21) Anmeldenummer: **04705010.9**

(22) Anmeldetag: **24.01.2004**

(51) Int Cl.:
*C10G 9/00* (2006.01)    *C10G 7/00* (2006.01)
*C10G 7/08* (2006.01)    *C10G 31/11* (2006.01)

(86) Internationale Anmeldenummer:
**PCT/EP2004/000602**

(87) Internationale Veröffentlichungsnummer:
**WO 2004/069962 (19.08.2004 Gazette 2004/34)**

(54) **VERFAHREN ZUR AUFARBEITUNG VON NAPHTHA**

METHOD FOR PROCESSING NAPHTHA

PROCEDE POUR TRAITER LE NAPHTE

(84) Benannte Vertragsstaaten:
**AT BE BG CH CY CZ DE DK EE ES FI FR GB GR HU IE IT LI LU MC NL PT RO SE SI SK TR**

(30) Priorität: **07.02.2003 DE 10305060**

(43) Veröffentlichungstag der Anmeldung:
**07.12.2005 Patentblatt 2005/49**

(73) Patentinhaber: **BASF Aktiengesellschaft
67056 Ludwigshafen (DE)**

(72) Erfinder:
• **BITTERLICH, Stefan
67246 Dirmstein (DE)**

• **VOSS, Hartwig
67227 Frankenthal (DE)**
• **SCHUCH, Gunter
67071 Ludwigshafen (DE)**
• **SINNEN, Rudolf
67256 Weisenheim (DE)**
• **LAIB, Heinrich
67117 Limburgerhof (DE)**
• **PÄSSLER, Peter
67435 Neustadt (DE)**

(56) Entgegenhaltungen:
**US-A- 5 635 055      US-A- 5 914 435
US-A- 6 013 852**

EP 1 601 746 B1

**Beschreibung**

Gegenstand der Erfindung ist ein Verfahren zur Aufarbeitung von Naphtha, wobei

a) Naphtha oder ein in einem Vorbehandlungsschritt aus Naphtha erzeugter Strom in einer Membraneinheit in einen an Aromaten abgereicherten Strom A und einen an Aromaten angereicherten Strom B aufgetrennt wird, wobei die Aromaten-Konzentration im Strom A 2 bis 12 Gew.-% beträgt,

b) der Teilstrom A zumindest teilweise in einen Steamcracker geführt wird,

c) der Teilstrom B zumindest teilweise in eine Einheit geführt wird, in der er mittels eines thermischen Verfahrens aufgetrennt wird in einen gegenüber Strom B an Aromaten abgereicherten Strom C oder mehrere Ströme C', C'', C''',... die jeweils niedrigere Gehalte an Aromaten aufweisen als Strom B, und einen gegenüber Strom B an Aromaten angereicherten Strom D oder mehrere Ströme D', D'', D''',... die jeweils höhere Gehalte an Aromaten aufweisen als Strom B,

d) der Strom C bzw. mindestens einer der Ströme C', C'', C''' jeweils ganz oder teilweise dem Feed zum Steamcracker oder dem Steamcracker selbst zugeführt wird.

Unter der Bezeichnung Naphtha zusammengefasste Erdölfraktionen enthalten in der Regel erhebliche Konzentrationen an Aromaten, insbesondre Benzol, Toluol und Xylole, wobei die Gesamt-Konzentration an den genannten Aromaten meist zwischen 5 und 50 Gew.-% beträgt. Wird das Naphtha mit dem Ziel der Erzeugung von Ethylen, Propylen und weiterer hochwertiger Kohlenwasserstoffe in einem Steamcracker verarbeitet, so bleiben die genannten und ggf. auch andere Aromaten dort im wesentlichen unumgesetzt. Daher stellen sie bei der genannten Verwendung des Naphthas einen unerwünschten Ballast dar, der bei einer gegebenen Menge an Wertprodukten in Steamcracker zum einen die für die Größe einer Vielzahl von Apparaten des Steamcrackers und zum anderen die Betriebskosten, vor allem solcher, die infolge Aufheizung und Wiederabkühlung des Feed- bzw. Produktstroms entstehen, erhöht.

In Desalination 149 (2002), 29-34 (Meindersma, de Haan) wird vorgeschlagen, das Naphtha vor der Einspeisung in den Cracker in eine Membraneinheit zu führen, in der selektiv Aromaten aus dem Naphtha entfernt werden. Die dort beschriebene Membraneinheit ist mit aromatenselektiven (zur Definition s.u.) Zeolithmembranen ausgestattet und ist so ausgeführt, dass eine 10 % Aromaten enthaltender Feedstrom in Teilströme mit 2 bzw. 98 % Aromaten aufgetrennt wird.

Die genannten verhältnismäßig hohen Reinheiten der Teilströme und die Tatsache, dass diese ausschließlich mittels Membranen herbei geführt werden, führen bei der vorgestellten Variante zu einem sehr hohen Aufwand, v.a. wegen des damit verbundenen Bedarfs an einer großen Membranfläche.

Die Aufgabe der vorliegenden Erfindung bestand deshalb darin, ein effizienteres Verfahren zur Aufarbeitung von Naphtha in einem Steamcracker bereitzustellen, bei dem der Feed des Steamcrackers nicht mit weitgehend inerten Aromaten belastet ist.

Bei Naphtha handelt es sich im Allgemeinen um paraffinische, aliphatische alicyclische, aromatische und olefinische $C_4$- bis $C_{12}$-Kohlenwasserstoffe enthaltende Mischungen im Siedebereich von 30°C bis 230°C, besonders im Bereich von 30°C bis 180°C und insbesondere im Bereich von 30 C bis 160°C. Diese Mischungen werden üblicherweise auf destillativem Weg aus Rohöl, Rohölfraktionen, aus dem Einsatz zur katalytischen Reformieranlage, aus dem Reformat oder den Reformatfraktionen der katalytischen Reformieranlage, Fraktionen aus thermischen und katalytischen Crackanlagen gewonnen, wobei auch verschiedene dieser Maßnahmen kombiniert werden können. Weiterhin kann Naphtha durch Mischen (blenden) verschiedener Rohölfraktionen, Reformat, Reformat-Fraktionen oder Fraktionen aus thermischen oder katalytischen Crackanlagen erzeugt werden.

Bei den abzutrennenden Aromaten handelt es sich üblicherweise um aromatische $C_6$-bis $C_{12}$-Kohlenwasserstoffe und deren Mischungen. Meistens handelt es sich bei den Aromaten im wesentlichen um Benzol, Toluol oder Xylole oder Mischungen hiervon.

Dabei beträgt die Konzentration der Aromaten des eingesetzten Naphthas bzw. des in einem Vorbehandlungsschritt aus Naphtha erzeugten Stroms 8 bis 50 Gew.-%, bevorzugt von 8 bis 20 Gew.-%, besonders bevorzugt von 10 bis 15 Gew.-%.

Der Einsatzstoff kann in einer Hydrieranlage zur Reduzierung der Schwefel - (S) und/oder der Stickstoffstoff - (N) Verbindungen und/oder zur Absättigung der Olefine vorbehandelt sein.

Der unter a) genannte Vorbehandlungsschritt enthält bevorzugt eine Destillation bzw. Rektifikation, die z.B. das Naphtha in zwei Ströme mit unterschiedlichem Aromatengehalt auftrennt, von denen der an Aromaten reichere Strom in die Membraneinheit und der an Aromaten ärmere direkt in den Cracker oder den Zustrom zum Cracker geführt wird. Dies bietet den Vorteil, dass bei gegebener Aromatenmenge im dem Gesamtprozess zugeführten Naphtha das Konzentrationsniveau der Aromaten in der Membraneinheit angehoben wird, was zu einer Erhöhung der transmembranen Flussdichten führt.

Die Membraneinheit wird so ausgeführt und betrieben, dass die Aromaten-Konzentration im Strom A 2 bis 12 Gew.%, bevorzugt 4 bis 10 Gew.-% beträgt. Die Aromaten-Konzentration im Strom B beträgt im Allgemeinen 10 bis 90 Gew.-% , bevorzugt 20 bis 60 Gew.-%.

Die unter a) genannte Membraneinheit enthält vorzugsweise mindestens eine aromatenselektive Membran. Dabei ist der Begriff aromatenselektiv so zu verstehen, dass die Gesamtkonzentration an Aromaten im Permeat eines mit der Membran ausgestatteten Membranapparats höher ist als im Retentat. Derartige Membranen sind dem Fachmann an sich bekannt; Beschreibungen finden sich beispielsweise in US 2,930,754 (Stuckey), US 5,128,439 (Sartori et al.) und EP 583,957 (Sartori et al.).

Ein Maß für die Aromaten-Selektivität ist der für eine ausgewählte Mischung aus einem Aromaten und einem Nichtaromaten geltende Trennfaktor $\alpha$, der wie folgt definiert ist:

$$\alpha \text{ (Aromat/Nichtaromat)} = (c_{A,P}/\ c_{NA,P})/\ (c_{A,F}/\ c_{NA,F})$$

mit

$c_{A,P}$ = Konzentration des Aromaten auf der Permeatseite,
$c_{NA,P}$ = Konzentration des Nichtaromaten auf der Permeatseite,
$c_{A,F}$ = Konzentration des Aromaten auf der Feedseite,
$c_{NA,F}$ = Konzentration des Nichtaromaten auf der Feedseite,
wobei mit Feedseite die Seite der Membran gemeint ist, auf der das zu trennende Gemisch aufgegeben wird. Die genannten Konzentrationen gelten gemäß der gültigen Definition lokal, d.h. nur an einem jeweils definierten Punkt der Membran in einem Membranapparat; der Trennfaktor $\alpha$ kann experimentell z.B. bestimmt werden, indem in einer mit einem Membranstück ausgestatteten Messzelle das Verhältnis von durch die Zelle strömender Feedmischung und der Fläche des Membranstücks so gewählt wird, dass im Verlauf der Überströmung die Zusammensetzung der Feedmischung praktisch konstant bleibt.

Die im erfindungsgemäßen Verfahren verwendete Membran ist so beschaffen, dass das $\alpha$ (Toluol/n-Oktan) 1,5 bis 100, bevorzugt 4 bis 40, besonders bevorzugt 5 bis 20 beträgt.

Die verwendeten Membranen können zum einen aus Polymeren bestehen, besonders bevorzugt aus solchen, die polare Gruppen enthalten; Beispiele für geeignete Polymere sind Polyacrylate, Polyacrylsäure, Polycarbonate, Polyterephtalate, Polyurethane, Polyamide, Polyimide, Polyetherimide, Polyetherketone, Cellulosederivate, teilhalogenierte Polyolefine wie z. B. PVC oder verschiedene sulfonierte Polymere sowie Copolymere. Als vorteilhaft bei der Verwendung von Polymermembranen hat sich deren Vernetzung mit geeigneten Reagenzien erwiesen, weil so einer die Selektivität verringernden Quellung des Polymers entgegen gewirkt werden kann.

Die Membranen können aber auch aus anorganischem Material bestehen wie z.B. mikroporösem Kohlenstoff (durch Pyrolyse von organischen Polymeren wie z.B. PP hergestellt) oder Zeolithen. Hier sind besonders Zeolithe vom Faujasit-Typ wie NaX oder NaY geeignet.

Die Membranen sind vorzugsweise als integralasymmetrische oder als Komposit-Membranen ausgeführt, bei denen die eigentliche die molekulare Trennung bewirkende Trennschicht, die eine Dicke von 0,05 bis 100, bevorzugt 0,1 bis 30 $\mu$m aufweist, auf einem oder mehreren meso- und/oder makroporösen Träger(n) aufgebracht ist.

Die Membranen können in Form von Flach-, Kissen-, Kapillar-, Monokanalrohr- oder Mehrkanalrohrelementen zum Einsatz kommen, die dem Fachmann an sich bekannt sind. Bei Membranelementen mit Rohrgeometrie befindet sich die Trennschicht vorzugsweise auf der Rohr-Innenseite.

Die Membranen sind im allgemeinen umgeben von einem oder mehreren Gehäusen aus polymerem, metallischem oder anorganischem Material, wobei die Verbindung zwischen Gehäuse und Membran durch ein abdichtendes Polymer (z.B. Elastomer) oder anorganisches Material gebildet wird.

Die Membraneinheit wird vorzugsweise in der dem Fachmann an sich bekannten Art einer Pervaporation betrieben, wobei das zu trennende Gemisch (Feed) in flüssiger Form mit der Membran in Kontakt gebracht und der die Membran passierende Strom (Permeat) gasförmig abgezogen wird. Die Temperatur, bei dem das zu trennende Gemisch mit der Membran in Kontakt bebracht wird, liegt zwischen 20 und 400°C, bevorzugt 80 bis 250°C. Der Druck beträgt auf der Feedseite der Membran 1 bis 100, bevorzugt 1 bis 20 bar abs. Der Druck beträgt auf der Permeatseite 1 bis 2000, bevorzugt 10 bis 1100 mbar abs., wobei der Druck auf der Feedseite immer höher als der auf der Permeatseite ist. Der permeatseitige Druck wird eingestellt durch Abführen des Permeatstroms mittels einer Vakuumpumpe und/oder eines Kompressors und/oder durch Kondensieren des Permeatstroms bei einer Temperatur, die zu einem dem gewünschten Permeatdruck entsprechenden Eigendruck des Permeatgemischs führt. Im Falle der Pervaporation kann es vorteilhaft sein, die benötigte Membranfläche auf mehrere Apparate aufzuteilen, und, zwecks Ausgleich des durch den Phasenübergang flüssiggasförmig verursachten Wärmeverlusts, einen oder mehrere Wärmeübertrager zwischen die Membranapparate zu schalten.

Die Membraneinheit kann aber auch in der dem Fachmann an sich bekannten Art einer Dampfpermeation betrieben werden, die sich von der Pervaporation dadurch unterscheidet, dass der Feed dampfförmig mit der Membran in Kontakt gebracht wird.

Das Membranverfahren kann zum einen einstufig ausgeführt sein, d.h. das Permeat aus einem Membranapparat oder die vereinigten Permeate aus mehreren vom Feed hintereinander oder parallel durchströmten Membranapparaten bildet/bilden ohne weitere Behandlung den genannten an Aromaten angereicherten Strom B und der nicht permeierte Anteil (Retentat) bildet ohne weitere Behandlung den genannten an Aromaten abgereicherten Strom A. Das Membranverfahren kann aber auch zwei- oder mehrstufig ausgeführt sein, wobei aus einer Stufe das Permeat als Feed in die jeweils folgende Stufe geführt wird und das Retentat aus dieser Stufe dem Feed in die erstgenannte Stufe zugemischt wird. Derartige Anordnungen sind an sich bekannt (siehe z.B. Sep.Sci.Technol. 31 (1996), 729 ff).

Die unter c) genannte Einheit enthält vorzugsweise einen oder mehrere Destillationsschritte unter Verwendung eines oder mehrerer Hilfsstoffe. Ein Hilfsstoff ist in diesem Zusammenhang eine Komponente, deren Zugabe zu einem Gemisch aus einem aromatischen und einem aliphatischen oder cycloaliphatischen Kohlenwasserstoff die relative Flüchtigkeit der beiden Kohlenwasserstoffe verändert, vorzugsweise so, dass die relative Flüchtigkeit des aliphatischen oder cycloaliphatischen Kohlenwasserstoffs bezogen auf den aromatischen Kohlenwasserstoff ansteigt. Geeignete Hilfsstoffe sind bevorzugt organische Verbindungen, welche polare funktionelle Gruppen wie Hydroxyl, Amino, Keton, Ester, Sulfonyl, Sulfoxid, oder, besonders bevorzugt, Amid enthalten. Am meisten bevorzugt als Hilfsstoff sind dabei N-Methyl-Pyrrolidon und N-FormylMorpholin. Der Destillationsschritt oder die Destillationsschritte unter Verwendung eines oder mehrerer Hilfsstoffe wird bzw. werden vorzugsweise nach der an sich bekannten Art einer extraktiven Rektifikation (siehe K. Sattler, Thermische Trennverfahren, VCH, 2. Aufl. 1995, S. 146 ff.) ausgeführt.

Die unter c) genannte Einheit kann aber auch einen Extraktionsschritt enthalten unter Verwendung eines Extraktionsmittels, für das die im vorangegangenen Abschnitt gegebene Beschreibung des Hilfsstoffes gleichermaßen gilt. Diese können auch als Mischungen mit Wasser vorliegen. In dem Fall, dass die unter c) genannte Einheit einen Extraktionsschritt enthält, wird diese vorteilhaft kombiniert mit einer Destillationseinrichtung, in der eine Trennung von Extraktionsmittel und Aromaten erfolgt.

Derartige Verfahren sind dem Fachmann an sich bekannt, siehe z.B. Hillis o: Folkins in: Ullmann's Encyclopedia, Sixth Edition, Electronic Release, Kap. 6.

In einer bevorzugten Ausführungsform des Verfahrens wird der an Aromaten angereicherte Strom B aus der Membraneinheit einer Rektifikation unterworfen, welche vorzugsweise so betrieben wird, dass Kohlenwasserstoffe, die 5 oder weniger Kohlenstoff-Atome je Molekül enthalten, im Kopfprodukt gegenüber dem Strom B angereichert werden, und Kohlenwasserstoffe, die 6 oder mehr Kohlenstoff-Atome je Molekül enthalten, im Sumpfprodukt gegenüber dem Strom B angereichert werden.

Das Sumpfprodukt wird vollständig oder teilweise in den Schritt c) geführt.

Das Kopfprodukt kann vorteilhaft vollständig oder teilweise dem Feed zum Steamcracker oder dem Steamcracker selbst zugeführt werden.

Im Allgemeinen beträgt die Aromaten-Konzentration des Stroms C, der gemäß Schritt d) in den Steamcracker zurückgeführt wird, bzw. des oder der Ströme C', C", C'''..., der bzw. die gemäß Schritt d) in den Steamcracker zurückgeführt wird bzw. werden, 0,01 bis 5 Gew.-%.

**Patentansprüche**

1. Verfahren zur Aufarbeitung von Naphtha, wobei man

   a) Naphtha oder ein in einem Vorbehandlungsschritt aus Naphtha erzeugter Strom in einer Membraneinheit in einen an Aromaten abgereicherten Strom A und einen an Aromaten angereicherten Strom B aufgetrennt wird, wobei die Aromaten-Konzentration im Strom A 2 bis 12 Gew.-% beträgt,
   b) der Teilstrom A zumindest teilweise in einen Steamcracker geführt wird,
   c) der Teilstrom B zumindest teilweise in eine Einheit geführt wird, in der er mittels eines thermischen Verfahrens aufgetrennt wird in einen gegenüber Strom B an Aromaten abgereicherten Strom C oder mehrere Ströme C', C", C'''... die jeweils niedrigere Gehalte an Aromaten aufweisen als Strom B, und einen gegenüber Strom B an Aromaten angereicherten Strom D oder mehrere Ströme D', D", D'''... die jeweils höhere Gehalte an Aromaten aufweisen als Strom B,
   d) der Strom C bzw. mindestens einer der Ströme C', C", C''' jeweils ganz oder teilweise dem Feed zum Steamcracker oder dem Steamcracker selbst zugeführt wird.

**2.** Verfahren nach Anspruch 1, **dadurch gekennzeichnet, dass** das Naphtha vor der Einführung in die Membraneinheit einem, bevorzugt destillativen, Vorbehandlungsschritt unterzogen wird, in dem das Naphtha in zwei Ströme mit unterschiedlichem Aromatengehalt aufgetrennt wird, von denen der an Aromaten reichere Strom in die Membraneinheit und der an Aromaten ärmere direkt in den Cracker oder den Zustrom zum Cracker geführt wird.

**3.** Verfahren nach einem der vorstehenden Ansprüche, **dadurch gekennzeichnet dass** der an Aromaten angereicherte Strom B einer Rektifikation unterworfen wird, welche so betrieben wird, dass Kohlenwasserstoffe, die 5 oder weniger Kohlenstoff-Atome je Molekül enthalten, im Kopfprodukt gegenüber dem Strom B angereichert werden, und Kohlenwasserstoffe, die 6 oder mehr Kohlenstoff-Atome je Molekül enthalten, im Sumpfprodukt gegenüber dem Strom B angereichert werden, und dass das Sumpfprodukt vollständig oder teilweise in den Schritt c) laut Anspruch 1 geführt wird.

**4.** Verfahren nach Anspruch 3, **dadurch gekennzeichnet, dass** das Kopfprodukt aus der Rektifikation von Strom B vollständig oder teilweise dem Feed zum Steamcracker oder dem Steamcracker selbst zugeführt wird.

**5.** Verfahren nach einem der vorstehenden Ansprüche, **dadurch gekennzeichnet, dass** Schritt c) gemäß Anspruch 1 einen oder mehrere Destillationsschritte unter Verwendung eines oder mehrerer Hilfsstoffe umfasst, wobei der Hilfsstoff so beschaffen ist, dass er in einem Gemisch aus einem aromatischen und einem aliphatischen oder cycloaliphatischen Kohlenwasserstoff die relative Flüchtigkeit des aromatischen Kohlenwasserstoffs senkt.

**6.** Verfahren nach einem der vorstehenden Ansprüche, **dadurch gekennzeichnet, dass** es sich bei den Aromaten im wesentlichen um Benzol, Toluol oder Xylole oder Mischungen hiervon handelt.

**7.** Verfahren nach einem der vorstehenden Ansprüche, **dadurch gekennzeichnet, dass** die Aromaten-Konzentration im Strom B 10 bis 90 Gew.-% beträgt.

**8.** Verfahren nach einem der vorstehenden Ansprüche, **dadurch gekennzeichnet, dass** die Aromaten-Konzentration des Stroms C, der gemäß Schritt d) in den Steamcracker zurückgeführt wird, bzw. des oder der Ströme C', C'', C'''..., der bzw. die gemäß Schritt d) in den Steamcracker zurückgeführt wird bzw. werden, 0,01 bis 5 Gew.-% beträgt.

**Claims**

**1.** A process for the work-up of naphtha, wherein

a) naphtha or a stream produced from naphtha in a pretreatment step is separated in a membrane unit into a stream A which is depleted in aromatics and a stream B which is enriched in aromatics, with the aromatics concentration in stream A being from 2 to 12% by weight,
b) at least part of the substream A is fed to a steam cracker,
c) at least part of the substream B is fed to a unit in which it is separated by means of a thermal process into a stream C which has a lower aromatics content than stream B or a plurality of streams C', C'', C'''... which each have lower aromatics contents than stream B and a stream D which has a higher aromatics content than stream B or a plurality of streams D', D'', D'''... which each have higher aromatics contents than stream B, and
d) the stream C or at least one of the streams C', C'', C''', in each case in part or in its entirety, is added to the feed to the steam cracker or fed into the steam cracker itself.

**2.** The process according to claim 1, wherein the naphtha is subjected, prior to introduction into the membrane unit, to a pretreatment step, preferably a step involving distillation, in which the naphtha is separated into two streams having different aromatics contents, of which the stream which is richer in aromatics is fed to the membrane unit and the stream which has a lower aromatics content is fed directly to the cracker or added to the feed stream to the cracker.

**3.** The process according to either of the preceding claims, wherein the stream B which is enriched in aromatics is subjected to a rectification which is operated in such a way that the top product has a higher concentration of hydrocarbons comprising 5 or fewer carbon atoms per molecule than the stream B and the bottom product has a higher concentration of hydrocarbons comprising 6 or more carbon atoms per molecule than the stream B and all or part of the bottom product is passed to step c) as set forth in claim 1.

**4.** The process according to claim 3, wherein all or part of the top product from the rectification of stream B is added to the feed to the steam cracker or fed into the steam cracker itself.

**5.** The process according to any of the preceding claims, wherein step c) as set forth in claim 1 comprises one or more distillation steps using one or more auxiliaries which reduce the relative volatility of the aromatic hydrocarbon in a mixture of an aromatic hydrocarbon and an aliphatic or cycloaliphatic hydrocarbon.

**6.** The process according to any of the preceding claims, wherein the aromatics are essentially benzene, toluene or xylenes or mixtures thereof.

**7.** The process according to any of the preceding claims, wherein the aromatics concentration in stream B is from 10 to 90% by weight.

**8.** The process according to any of the preceding claims, wherein the aromatics concentration of the stream C which is recirculated to the steam cracker as set forth in step d) or of the stream or streams C', C'', C'''... which is/are recirculated to the steam cracker as set forth in step d) is from 0.01 to 5% by weight.

**Revendications**

**1.** Procédé de traitement de naphte, dans lequel

a) du naphte ou un courant produit à partir de naphte dans une étape de prétraitement est séparé dans une unité à membrane en un courant appauvri en substances aromatiques A et un courant enrichi en substances aromatiques B, la concentration en substances aromatiques dans le courant A étant de 2 à 12 % en poids,
b) le courant partiel A est conduit au moins partiellement dans un vapocraqueur,
c) le courant partiel B est au moins partiellement conduit dans une unité dans laquelle il est séparé au moyen d'un procédé thermique en un courant C ou plusieurs courants C', C'', C'' ', ..., appauvris en substances aromatiques par rapport au courant B, qui présentent chacun des teneurs en substances aromatiques inférieures au courant B, et en un courant D ou plusieurs courants D' , D'', D''' , ..., enrichis en substances aromatiques par rapport au courant B et qui présentent chacun des teneurs en substances aromatiques supérieures au courant B,
d) le courant C ou au moins un des courants C', C'', C''' est respectivement amené totalement ou partiellement à l'alimentation du vapocraqueur ou au vapocraqueur lui-même.

**2.** Procédé suivant la revendication 1, **caractérisé en ce que**, avant l'introduction dans l'unité à membrane, le naphte est soumis à une étape de prétraitement, de préférence par distillation, dans laquelle le naphte est séparé en deux courants à teneurs en substances aromatiques différentes, parmi lesquels le courant plus riche en substances aromatiques est conduit dans l'unité à membrane et le courant plus pauvre en substances aromatiques est conduit directement dans le craqueur ou au courant d'alimentation du craqueur.

**3.** Procédé suivant l'une des revendications précédentes, **caractérisé en ce que** le courant B enrichi en substances aromatiques est soumis à une rectification qui est mise en oeuvre de façon que des hydrocarbures, qui contiennent cinq atomes de carbone ou moins par molécule, soient enrichis dans le produit de tête par rapport au courant B et des hydrocarbures, qui contiennent six atomes de carbone ou plus par molécule, soient enrichis dans le produit de fond par rapport au courant B et **en ce que** le produit de fond est conduit totalement ou partiellement dans l'étape c) selon la revendication 1.

**4.** Procédé suivant la revendication 3, **caractérisé en ce que** le produit de tête provenant de la rectification du courant B est totalement ou partiellement amené à l'alimentation du vapocraqueur ou au vapocraqueur lui-même.

**5.** Procédé suivant l'une des revendications précédentes, **caractérisé en ce que** l'étape c) suivant la revendication 1 comporte une ou plusieurs étapes de distillation avec utilisation d'une ou de plusieurs substances auxiliaires, la substance auxiliaire étant d'une nature telle que, dans un mélange d'un hydrocarbure aromatique et d'un hydrocarbure aliphatique ou cycloaliphatique, elle diminue la volatilité relative de l'hydrocarbure aromatique.

**6.** Procédé suivant l'une des revendications précédentes, **caractérisé en ce que**, pour ce qui concerne les substances aromatiques, il s'agit essentiellement de benzène, de toluène ou de xylènes ou de leurs mélanges.

7. Procédé suivant l'une des revendications précédentes, **caractérisé en ce que** la concentration en substances aromatiques dans le courant B est de 10 à 90 % en poids.

8. Procédé suivant l'une des revendications précédentes, **caractérisé en ce que** la concentration en substances aromatiques du courant C, qui est, conformément à l'étape d), recyclée dans le vapocraqueur, ou du ou des courants C', C'', C''', ..., qui est ou sont, conformément à l'étape d), recyclés dans le vapocraqueur, est de 0,01 à 5 % en poids.